# EUROPEAN PATENT APPLICATION

(11) **EP 1 449 878 A1**
(43) Date of publication of application: **25.08.2004**
(21) Application number: 03075528.4
(22) Date of filing: 24.02.2003
(51) Int. Cl.: C08L 23/10, C09D 123/10

(54) **Polypropylene compositions**

(71) Applicant: Borealis Technology Oy, 06101 Porvoo (FI)
(72) Inventor: Laiho, Erkki, 06450 Porvoo (FI); Prahl, Pekka, 07500 Askola (FI); Sainio, Markku, 06100 Porvoo (FI); Salmirinne, Mikko, 04130 Sipoo (FI)
(74) Representative: Hakkila, Maini Annika

(57) **Abstract**

The present invention relates to polypropylene compositions with improved processability and to a method for the manufacture of said compositions. Said compositions are particularly suitable for extrusion coating processes. The polypropylene composition comprises from 50 to 90 wt% of polypropylene selected from propylene homopolymer, random copolymer and blockcopolymer, from 5 to 25 wt% of low-density polyethylene and from 5 to 40 wt% of unimodal and/or bimodal and/or multimodal high-density polyethylene.

## Description

### Field of invention

The present invention relates to polypropylene compositions with improved processability. Said compositions are particularly suitable for extrusion coating processes. More specificly, the invention relates to blends of polypropylene (PP) comprising low-density polyethylene (LDPE) and high-density polyethylene (HDPE).

### State of the Art

Extrusion coating is a process in which an extruder forces melted thermoplastic polymer through a horizontal slot die onto a moving web of a substrate material, which may comprise paper, board, film or aluminium foil. From the extruder the polymer melt, generally at a temperature from 270 to 330°C, is lead via an adapter and a pipe to a die where a thin molten film is formed. Typically the size of die lip opening is from 0.5 to 1.0 mm for extrusion coating dies and the desired coating thickness may be less than 10 µm. Line speeds in extrusion coating processes may typically vary in the range from 300 to 700 m/min. Typically the laminator runs at a speed of at least 50 times faster than the speed that the plastic is travelling in the die lip or air gap.

The plastic is then drawn down to a desired thickness. As the draw down takes place, a curtain of plastic exciting the die often necks-in i.e. it is pulled thinner in width. Draw down speed is the maximum speed, which can be reached before the molten polymer film breaks. Due to internal stress in polymers, the effective coating width is always narrower than the actual die slot width. This difference is called neck-in (= width of the die slot - width of the coating) and is measured in mm.

The neck-in phenomenon may cause bunch-up at the edges resulting in edge beds, which prohibit the machine from winding a good roll of coating product and the roll will wind along the thick edge and be lose and uncontrolled in the centre, and also draw resonance may appear.

Low-density polyethylene (LDPE) is mainly used in extrusion coating because of the ease in processing, although stiffness, barrier properties and temperature resistance of LDPE are often not satisfactory. Some high-density polyethylene (HDPE) is also used.

Propylene polymer is very difficult or almost impossible to run in an extrusion coating process because of the neck-in phenomenon and draw resonance, the adhesion of polypropylene on substrates is not satisfactory and typically pinholes appear in the product and line speeds are very low.

Polypropylene is a well-known commercial polymer, which is used for a variety of products, such as packaging films and molded shapes. It is produced for example by polymerisation of propylene over transitional metal coordination catalysts.

Commercial propylene homopolymers exhibit several desirable properties, such as good heat tolerance and transparency, which make polypropylene polymers interesting in many application fields.

Attempts have also been made to manufacture blends of polypropylene with low-density polyethylene for extrusion coating applications. A blend of LDPE with a melting point of 110°C and polypropylene with a melting point of 160°C has been proposed but the processing of the blend was unsatisfactory. When a blend of polypropylene and LDPE is used, the plastic leaving the die lip as a curtain of a height of approximately from 20 to 30cm, typically becomes too stiff, and it cannot be stretched/pulled sufficiently. As a result, only low line speeds can be used, additionally the neck-in problem appears and an uneven coating is obtained, and further, the product is uneconomic to produce. Also blends of HMS (high melt strength) Daploy modified polypropylene have been proposed but the manufacturing process of HMS is complicated and very expensive.

US 4,508,872 discloses a composition comprising modified propylene polymer, LLDPE and HDPE. The polypropylene is preferably an impact-modified propylene copolymer, which is peroxide-contacted (visbroken) separately and the HDPE and the LLDPE are melt blended with the visbroken propylene copolymer. Said blend possesses extremely good impact resistance along with high melt flow without excessive loss of stiffness.

US 5,773,123 discloses an air infiltration barrier laminate, which comprises a perforated laminate made from a woven polyolefin fabric, a resin and a polyolefin film. The resin is extrusion coated onto the woven polyolefin fabric and the resin may be low-density polyethylene, polypropylene and the like, preferably polyethylene is used. The resin is discarded from the die to form a falling sheet of molten resin and the resin is extruded at such rate so as to form a layer of molten resin, said layer having a thickness from about 0.1 to 400 mil.

Based on the above it can be seen that there exists a need for a polypropylene composition, which can be used in extrusion coating at high line speeds and which yields a homogenous and even coating of high quality and without any excess neck-in or draw resonance problems.

### Object of invention

An object of the invention is to provide polypropylene compositions, which suit particularly well for extrusion coating processes.

A further object of the invention is a method for the manufacture of a polypropylene composition for extrusion coating processes.

A still further object of the invention is the use of a polypropylene composition in extrusion coating processes.

Characteristic features of the polypropylene composition, of the method for the manufacture of a polypropylene composition and of the use of a polypropylene composition are provided in the claims.

### Summary of the invention

The present invention deals with polypropylene compositions having good flow characteristics and processability in extrusion coating and which polypropylene compositions yield extrusion coating products of high quality. Specifically, the present invention deals with compositions comprising polypropylene, low-density polyethylene and unimodal and/or bimodal and/or multimodal high-density polyethylene.

### Detailed description of the invention

It has now been discovered that the problems and deficiencies of the compositions and blends according to the state of the art can be avoided or at least significantly decreased with a composition according to the present invention. It has been noted that a combination of polypropylene, LDPE and unimodal and/or bimodal and/or multimodal HDPE meets the objectives. Polypropylene yields the products stiffness and thermal resistance. LDPE yields the products processability and runnability in extrusion coating. Unimodal and/or bimodal and/or multimodal HDPE, which have optimal shear thinning and elongational viscosity properties, yield the products excellent draw down values and allow stretching/pulling and further improve the compounding of LDPE and PP homogenously with each other. The addition of unimodal and/or bimodal and/or multimodal HDPE improves the coating uniformity and gives an even profile. It also enables to use in the process high line speeds before melt film breaking occurs, and the edge weaving is negligible, also with higher line speeds. Further, HDPE adds good temperature resistance to the final coating.

The composition according to the invention comprises:
from 50 to 90 wt%, preferably from 60 to 80 wt% of polypropylene selected from propylene homopolymer, random copolymer and blockcopolymer, with a MFR from 10 to 60 g/10min, preferably from 20 to 40 g/10min (230°C, 2.16 kg);
from 5 to 25 wt%, preferably from 10 to 20 wt% of low-density polyethylene (LDPE), with a MFR from 3 to 18 g/10min preferably from 4.5 to 8.5 g/10min (190°C, 2.16 kg) and with a density from 915 to 925 kg/m³, preferably from 918 to 923 kg/m³; and
from 5 to 40 wt%, preferably from 5 to 25 wt% and particularly preferably from 7.5 to 15 wt% of unimodal and/or bimodal and/or multimodal high-density polyethylene (HDPE) with a MFR from 5 to 15 g/10min, preferably from 7 to 12 g/10min (190°C, 2.16 kg) of and with a density from 950 to 965 kg/m³, preferably from 955 to 962
kg/m³.

Preferably, the HDPE comprises from 40 to 60 wt% of a low molecular component and from 60 to 40 wt% of a high molecular weight component. The low molecular weight component has a weight average molecular weight of from about 10 000 to 50 000, a melt index from about 50 to 1000 g/10 min, preferably from 100 to 800 g/10 min, and a density from about 950 to 980 kg/m³, preferably from 955 to 965 kg/m³. Particularly preferably the low molecular weight component is a homopolymer. The high molecular weight component has a weight average molecular weight from about 150 000 to 400 000 and a density from about 920 to 950 kg/m³, preferably from 925 to 940 kg/m³.

The propylene polymer may be produced with any method known in the art. One or more reactors used in the manufacturing process may be selected from solution polymerisation, slurry/liquid phase polymerisation and gas phase polymerisation reactors, in any order. Copolymerisation may be performed in one or more reactors.

Preferably the LDPE is manufactured with high-pressure autoclave reactor technique and preferably the LDPE contains no additives.

The HDPE is preferably bimodal HDPE manufactured by loop-gas phase reactor technique as is described for example in patent EP 517868, the content of which is incorporated by reference herein. The HDPE may contain minor amounts of stabilization compounds and it may also comprise a comonomer, such as 1-butene or octene or hexane or 4-methyl pentene.

The process for the manufacture of the composition according to the invention is suitably carried out by blending all components together, then charging them to an extruder with a long screw and applying high temperatures.

An alternative method is to compound two of the first components together to form a master-batch and then the third component can be added to the final blend as a separate operation. The melt index of polypropylene can also be modified by visbreaking in order to increase the MFR of the polymer. This can be made at any stage of the compounding.

The composition according to the present invention enables the maintaining of the desired properties of propylene homopolymer, such as temperature resistance, grease resistance barrier properties, stiffness, hardness and transparency. Further advantages of the compositions according to the invention are described in the following.

The processability of the composition is very satisfactory, and the composition has improved compounding properties due to favourable properties of HDPE, particularly due to the bimodality of HDPE. It may easily be extruded by any extrusion coating methods and high line speeds, such as 600-700 m/min can be maintained even at lower temperatures. This results in better yields, higher outputs of the process and less need for energy.

The obtained coating is homogenous and even and it has good water vapour and grease barrier properties and no pinholes appear in the coating. Also a coating of thinner thickness can be manufactured, which results in lower surface weights of the products. Further, the product has good printability properties. The coating is stiffer and harder and it has a higher VICAT-softening temperature value, which results in that the amount of easier melting compounds is smaller and the coating has improved thermal resistance.

The extruded coating layer may also be a coextruded multi-layer structure in which the polymer layer according to the invention is coextruded with e.g. propylene homopolymer in order to support the problematic polypropylene coating. This can be carried out without any adhesive polymer layer in between. The polymer composition according to the invention may also be coextruded with LDPE. Further, the polymer composition according to the invention may also be used in extrusion lamination in which the polymer is extruded in between two substrate webs.

A coating according to the invention suits well for substrates like papers, cardboards, non-wovens, plastic-films such as BOPP, wovens, metal foils, woven polyolefin fabrics and the like. It can also be used in connection with food products, as construction materials and as any kinds of packaging materials.

The composition according to the invention is illustrated in more detail with embodiments presented in the following examples, however, to which the scope of the invention is not limited.

### Examples

The bimodal high-density polyethylene HDPE used in the examples was produced in a loop-gas phase reactor process, which is disclosed for example in WO 0071615. Typically, the HDPE is prepared using multistage polymerisation with a single catalyst system or a plurality of catalyst systems and the molecular weight distribution (MWD) of the HDPE varies between 5 and 100.

The HDPE was manufactured as follows:
Into a 50 dm³ pre-polymerisation loop reactor, operated at 80 °C and under 65 bar, was introduced 1 kg/hour ethylene, 22 kg/hour propane, 2 g/hour hydrogen and the polymerisation catalyst of EP-B-688794 (loaded on 20 micron silica) was used in a quantity such that PE (polyethylene) production rate was 6.8 kg PE/hour. The MFR₂ and density were estimated at 30g/10 min and 970 kg/m³ respectively in pre-polymerisation.
The slurry was continuously removed from the loop reactor and introduced into a second loop reactor having a volume of 500 dm³, operating at 95°C and under 60 bar. Additional ethylene, propane and hydrogen were added so as to produce polyethylene at 27 kg/hour having a MFR₂ of 500 g/10 min and a density of 974 kg/m³. The polymer (still containing the active catalyst) was separated from the reaction medium and transferred to a gas phase reactor operating at 85°C and under 20 bar, where additional hydrogen, ethylene and 1-butene comonomer were added so as to produce polyethylene at 70 kg/hour having a MFR₂ of 9 g/10 min and a density of 960 kg m³. The fraction of high MFR (low Mw molecular weight) material in the total polymer was thus 40 %. The MWD of the HDPE used in the following examples was 14.

### Example 1

A blend was prepared by melt blending using an extruder Berstorff ZE 40. The melt temperature was 240°C.

The blend composition was as follows:
70 wt % of propylene homopolymer, MFR 35g/10min (230°C, 2.16 kg)
15 wt% of high pressure LDPE, MFR 4.5g/10min (190°C, 2.16 kg),density 923 kg/m³
15 wt % of bimodal HDPE, MFR 9g/10min (190°C, 2.16 kg), density 960 kg/m³

The blend was run on a Beloit coating line, with a melt temperature of 300°C.

Standard coating test runs to determine maximum coating speed (DD), neck-in, draw resonance (Edge waving) and coating profile were evaluated. The substrate was UG Kraft 70 g/m² paper and paper width 80 cm.

The addition of bimodal HDPE improved the coating uniformity and gave an even profile. Also it was possible to use much higher line speed before melt film breaking occurred. The edge weaving was negligible also with higher speed.

### Comparative Example 1

A commercial extrusion coating grade polypropylene containing 30 wt% of LDPE and having a MFR of 23 g/10min (230°C, 2.16 kg) and a density of 910 kg/m³, was run as comparison. Edge weaving and uneven coating profile were observed and also the coating speed was very limited. Results of Example 1 and Comparative Example 1 are presented in following Table 1.

**Table 1.**

| **Property** | **Comparative Example 1** | **Example 1** |
|---|---|---|
| MFR (230C°, 2.16 kg) (g/10min) | 23 | 20 |
| Density (kg/m³) | 910 | 912 |
| DD (10g/m²) (m/min) | 80-100 | 700 |
| Edge weaving (20/100)* (mm) | 10 | 3 |
| Profile uniformity (10g/m²) (g/m²) | ± 1.1 | ± 0.4 |
| Neck-in (mm) | 80 | 114 |

| | | |
|---|---|---|
| *20 g/m², 100 m/min | | |

### Example 2

A compound was prepared by melt blending in a full scale compounding line. A standard additive package was used in the blend.

The compound composition was:
80 wt % of propylene homopolymer, MFR 35g/10min (230°C, 2.16 kg)
10 wt % of high-pressure LDPE, MFR 4.5 g/10min (190°C, 2.16 kg),density 923 kg/m³
10 wt % of bimodal HDPE, MFR 9 g/10min(190°C, 2.16 kg), density 960 kg/m³

The blend was run on a Beloit coating line with a melt temperature of 300°C, and all characteristic coating tests were carried out.

When part of the LDPE was replaced with bimodal HDPE, the motor load (as Amperes) and extruder counter pressure were unexpectedly at lower level compared to commercial extrusion coating PP (polypropylene) grade. This is due to lubrication effect of low MW part in bimodal HDPE. The coating speed can be increased, and even the profile becomes more even then.

### Comparative Example 2

A commercial extrusion coating polypropylene grade containing 20 wt% of LDPE and having a MFR of 20 g/10min and a density of 910 kg/m³, was run as comparison. The coating was performed as in Example 2. The result was similar to Comparative Example 1.

Results of the Example 2 and the Comparative Example 2 are presented in following Table 2.

**Table 2.**

| **Property** | **Comparative Example 2** | **Example 2** |
|---|---|---|
| MFR (230C°, 2.16 kg) (g/10min) | 20 | 22 |
| Density (kg/m³) | 910 | 910 |
| DD (10g/m²) (m/min) | 140 | 400 |
| Edge weaving (20/100)* (mm) | 8 | 2 |
| Profile uniformity (10g/m²) (g/m²) | ± 1.2 | ± 0.8 |
| Amperes (20/100) | 248 | 244 |
| Extruder counter pressure (bar) | 145 | 142 |

| | | |
|---|---|---|
| *20 g/m², 100 m/min | | |

In order to optimise the blending ratio, two further blends described in examples 3 and 4 were made:

### Example 3

The compound composition was:
72.5 wt % of propylene homopolymer, MFR 35 g/10min (230C°, 2.16 kg)
20 wt% of high-pressure LDPE, MFR 4.5 g/10min(190°C, 2.16 kg),density 923 kg/m³
7.5 wt % of bimodal HDPE, MFR 9 g/10min (190°C, 2.16 kg), density 960 kg/m³

### Example 4

The compound composition was:
60 wt % of propylene homopolymer, MFR 35 g/10min (230C°, 2.16 kg)
25 wt % of high-pressure LDPE, MFR 4.5 g/10min(190°C,2.16 kg),density 923 kg/m³
15 wt % of bimodal HDPE, MFR 9 g/10min (190°C, 2.16 kg), density 960 kg/m³

The blends were run on full-scale coating line ER-WE-PA, 6", melt temperature was 305°C. Unexpectedly coating conditions, which are normal for commercial coating grades of high pressure LDPE, were achieved and still the coating process and the coating result was good. The line speed was 300 m/min, coating weight 23g/m². The profile variation was only ± 1.2 g/m². The comparative run was made with commercial polypropylene for extrusion coating containing 20 wt% of LDPE showing clear edge weaving and uneven profile.

The processability of the product of example 3 was a slightly better than that of example 4.

The blend of example 2 was produced in a commercial polypropylene plant. The melt flow of polypropylene polymer was increased in-line during melt blending by side feeder.

### Methods used:

**Melt Flow Rate,** MFR was measured according to ISO 1133. Polypropylene was measured at 230°C, 2.16 kg load. Polyethylene was measured at 190°C, 2.16 kg load.

Density was determined according to method ISO 1183 as kg/m³.

**Molecular weight distribution MWD** was calculated as Mw/Mn. Molecular weights Mw and Mn were measured with GPC, Gel Permeation Chromatograph.

**Drawdown** DD (10g/m²) was determined by keeping the coating weight constant (10 g/m²) during the testing period. The starting line speed was (100 m/min, 10g/m²) and it was increased with the acceleration of 100 m/min at 25 seconds until the point when molten film broke. This was recorded as draw down speed (m/min).

In many cases, especially with difficult polymers such as polypropylene the web starts to fluctuate before total breaking. This is normally recorded as edge weaving (mm).

**Profile uniformity** was measured as across the transverse direction of the coated product. Five 100 cm² round samples were taken with constant intervals. The coated layer was separated from the substrate (by liquid) and polymer layer was weighted. The results were presented as an average coating weight (g/m²) and profile uniformity by average variances (± g/m²) across the transverse direction.

## Claims

1. Polypropylene composition, **characterized in that** it comprises from 50 to 90 wt% of polypropylene selected from propylene homopolymer, random copolymer and blockcopolymer, from 5 to 25 wt% of low-density polyethylene and from 5 to 40 wt% of unimodal and/or bimodal and/or multimodal high-density polyethylene.

2. The polypropylene composition according to claim 1, **characterized in that** the polypropylene has a MFR from 10 to 60 g/10min (230°C,2.16 kg), the low-density polyethylene has a MFR from 3 to 18 g/10min (190°C,2.16kg) and a density from 915 to 925 kg/m³, and the high-density polyethylene has a MFR from 5 to 15 g/10min (190°C,2.16kg) and a density from 950 to 965 kg/m³.

3. The polypropylene composition according to claim 1 or 2, **characterized in that** it comprises from 60 to 80 wt% of polypropylene, from 10 to 20 wt% of low density polyethylene and from 5 to 25 wt% of high-density polyethylene.

4. The polypropylene composition according to any one of claims 1 - 3, **characterized in that** the polypropylene has a MFR from 20 to 40 g/10min (230°C,2.16 kg), the low-density polyethylene has a MFR from 4.5 to 8.5 g/10min (190°C,2.16kg) and a density from 918 to 923 kg/m³, and the high-density polyethylene has a MFR from 7 to 12 g/10min (190°C,2.16kg) and a density from 955 to 962 kg/m³.

5. The polypropylene composition according to any one of claims 1 - 4, **characterized in that** the low density polyethylene is manufactured using high pressure technique and the high density polyethylene is bimodal high density polyethylene, which is manufactured using loop-gas phase technique.

6. Polypropylene composition according to any one of claims 1 - 5 for extrusion coating and for extrusion lamination.

7. A method for the manufacture of a polypropylene composition, **characterized in that** from 50 to 90 wt% of polypropylene selected from propylene homopolymer, random copolymer and blockcopolymer, from 5 to 25 wt% of low-density polyethylene and from 5 to 40 wt% of unimodal and/or bimodal and/or multimodal high-density polyethylene are charged to an extruder with a long screw, or two of the first components are compounded together to form a master-batch and then the third component is added to the final blend as a separate operation, and optionally the melt index of the polypropylene is modified by visbreaking at any stage of the compounding.

8. A method according to claim 7, for the manufacture of a polypropylene composition, **characterized in that** the polypropylene has a MFR from 10 to 60 g/10min (230°C,2.16kg), the low-density polyethylene has a MFR from 3 to 18 g/10min (190°C,2.16kg) and a density from 915 to 925 kg/m³, and the high-density polyethylene has a MFR from 5 to 15 g/10min (190°C,2.16kg) and a density from 950 to 965 kg/m³.

9. A method according to claim 7 or 8, for the manufacture of a polypropylene composition, **characterized in that** from 60 to 80 wt% of polypropylene, from 10 to 20 wt% of low-density polyethylene and from 5 to 25 wt% of high-density polyethylene are used.

10. A method according to any one claims 7-9, for the manufacture of a polypropylene composition, **characterized in that** the polypropylene has a MFR from 20 to 40 g/10min (230°C,2.16kg), the low-density polyethylene has a MFR from 4.5 to 8.5 g/10min (190°C,2.16kg) and a density from 918 to 923 kg/m³, and the high-density polyethylene has a MFR from 7 to 12 g/10min (190°C,2.16kg) and a density from 955 to 962 kg/m³.

11. A method according to any one claims 7-10, for the manufacture of a polypropylene composition, **characterized in that** the low density polyethylene is manufactured using high pressure technique and the high density polyethylene is bimodal high density polyethylene, which is manufactured using loop-gas phase technique.

12. Use of a polypropylene composition according to any one of claims 1-5, or manufactured according to any one claims 7-11, in extrusion coating and in extrusion lamination.
